# EUROPÄISCHE PATENTSCHRIFT

(11) **EP 2 429 047 B1**
(45) Veröffentlichungstag und Bekanntmachung des Hinweises auf die Patenterteilung: **17.08.2016**
(21) Anmeldenummer: 11006782.4
(22) Anmeldetag: 19.08.2011
(51) Int. Cl.: H02B 1/06

(54) **Elektrischer Schaltschrank**
Electric cabinet
Armoire électrique

(30) Priorität: 08.09.2010 DE 102010044760
(43) Veröffentlichungstag der Anmeldung: 14.03.2012
(73) Patentinhaber: ABB AG, 68309 Mannheim (DE)
(72) Erfinder: Roth, Michael, 77880 Sasbach (DE)

(56) Entgegenhaltungen:
- EP-A1- 0 494 571
- EP-A1- 1 921 722
- WO-A1-92/14289
- AT-B- 288 518
- DE-A1- 19 854 885
- DE-U- 1 910 085

## Beschreibung

Die Erfindung betrifft einen elektrischen Schaltschrank für die Haus- und/oder Industrieinstallation mit darin angeordneten Einbauteilen, die üblicherweise als Normfelder bezeichnet sind, deren Abmessungen standardisiert sind, wobei für einen erleichterten Einbau der im Schaltschrank vorgesehene Einbauraum für die Einbauteile um wenige Millimeter größer gewählt ist, als deren Abmessungen erfordern, so dass jeweils ein Spalt zwischen dem Schaltschrank und den Einbauteilen entsteht.

Es ist allgemein bekannt, dass Schaltschränke durch die Normung gegebene Aussenmaße besitzen. Ebenso sind die Breiten und Höhen der Einbauteile, das heißt die sogenannten Normfelder, welche in die Schaltschränke eingebaut werden, durch entsprechende Standards festgelegt.

Um die Normfelder leicht in den Schrank einbauen zu können, wird üblicherweise das Innenmaß der Schränke um mehrere Millimeter größer gewählt, als die einzubauenden Normfelder tatsächlich ausgeführt werden. Aus diesem Grund entsteht zwischen den Abdeckungen der Normfelder und dem Berührungsschutz ein Spalt, der oft größer ist als gemäß der vorgegebenen Schutzart der Schränke erlaubt.

Die EP 1 921 722 A1 offenbart einen Schaltschrank gemäß dem Oberbegriff des Anspruchs 1.

Ausgehend von diesem Stand der Technik ist es Aufgabe der Erfindung, eine Abdeckung für die Spalte zwischen der Innenwandung der elektrischen Schaltschränke für die Haus- und/oder Industrieinstallation der eingangs genannten Art, die mit darin angeordneten Einbauteilen versehen sind, zu schaffen. Hiermit soll das Entstehen eines Spalts zwischen den Einbauteilen und der Innenwand der Schaltschränke verhindert werden.

Diese Aufgabe wird erfindungsgemäß durch die kennzeichnenden Merkmale des Anspruches 1 gelöst.

Demgemäß ist erfindungsgemäß vorgesehen, dass für jeden Spalt eine Abdeckung vorgesehen ist, die in den betreffenden Spalt eingreift und als Berührungsschutz dient.

Gemäß einer bevorzugten Ausführungsform der Erfindung füllt die als Berührungsschutz vorgesehene Abdeckung den betreffenden Spalt jeweils komplett aus. So wird das Spaltmaß zwischen Abdeckungen der Normfelder und dem Schaltschrankgehäuse durch die besondere Gestaltung des erfindungsgemäßen Berührungsschutzes praktisch in voller Gänze reduziert.

Gemäß einer weiteren vorteilhaften Ausgestaltung der Erfindung ist die als Berührungsschutz vorgesehene Abdeckung aus Kunststoff gebildet. Erfindungsgemäß ist die als Berührungsschutz vorgesehene Abdeckung aus unterschiedlichen Kunststoffen gebildet, die bereichsweise miteinander verbunden sind.

Erfindungsgemäß ist vorgesehen, dass die als Berührungsschutz vorgesehene Abdeckung als Kunststoffprofil ausgebildet ist.

Die Erfindung ist dadurch gekennzeichnet, dass das Kunststoffprofil wenigstens eine Haltelippe aus zähhartem Kunststoff als Spaltabdeckung aufweist sowie wenigstens einen parallel zur Haltelippe angeordneten Wulst aus weichem Kunststoff, der als Berührungsschutz dient.

Bevorzugterweise ist die wenigstens eine Haltelippe zum Eingriff in den betreffenden Spalt zwischen Schaltschrank und Einbauteil vorgesehen und legt sich bündig an die Wand des Schaltschrankes an.

Dabei ist in weiterer Verbesserung der Erfindung die wenigstens eine Haltelippe als Hohlkammerprofil aus einem zähharten Kunststoff ausgebildet, zum Beispiel ABS, PP oder PS.

Gemäß einer weiteren bevorzugten Ausgestaltung ist der wenigstens eine Wulst als Anpresslippe aus biegeelastischem Kunststoff federnd ausgebildet und schließt an das die Haltelippe bildende Profil an. Hierbei dient als biegeelastischer Kunststoff, insbesondere für die Anpresslippe, vorzugsweise zum Beispiel TPE / TPS (Thermoplastische Elastomere).

Gemäß einer vorteilhaften Ausführungsform bildet die wenigstens eine parallel zur Haltelippe angeordnete Anpresslippe ein mit einer Hohlkammer versehenes Profil, welches insbesondere zur Anbindung und Abstützung dient.

Eine weitere bevorzugte Ausgestaltung der Erfindung ist dadurch gekennzeichnet, dass die aus der wenigstens einen Haltelippe gebildete Abdeckung in Wechselwirkung mit der wenigstens einen federnd wirksamen als Berührungsschutz dienenden Anpresslippe in dem Spalt gehalten ist. Hierbei dient einerseits die Wandung des elektrischen Schaltschranks und andererseits das betreffende Einbauteil als Widerlager, an denen sich die erfindungsgemäße als Berührungsschutz vorgesehene Abdeckung abstützt.

Vorteilhafterweise können zwei oder mehr Anpresslippen vorgesehen sein, die jeglichen Zugang sowie manuellen Eingriff in den betreffenden Spalt zwischen Schaltschrank und Einbauteil verhindern.

Darüber hinaus ist in weiterer Verbesserung der Erfindung die als Berührungsschutz vorgesehene Abdeckung maßlich derart dimensioniert, dass die Abdeckung stets unmittelbar an dem der Wandung des Schaltgehäuses nahen Umfang des betreffenden Einbauteils anschließt.

Auch durch diese Maßnahme wird die angestrebte Schutzwirkung mit einfachen Mitteln erreicht, so dass das als Berührungsschutz vorgesehene Kunststoffprofil eine rundum geschlossene Abdeckung der Spalte zwischen Schaltschrank und Einbauteil gewährleistet.

Eine weitere vorteilhafte Variante, die insbesondere für die Abdeckung von Spalten mit größerer Spaltbreite, von zum Beispiel einigen Millimetern bis Zentimeter, Verwendung findet, ist dadurch gekennzeichnet, dass die als Berührungsschutz vorgesehene Abdeckung als Kunststoffhohlprofil mit Halte- und Anpresslippen ausgebildet ist. Diese Variante bietet den Vorteil von ausreichender Steifigkeit einerseits infolge der sachgerechten Abordnung der jeweiligen Hohlkammern bei gleichzeitig zweckentsprechender Formgebung der dauerelastischen Anpresslippen andererseits.

Grundsätzlich ist das Berührungsschutzprofil im Wesentlichen in bekannter Art und Weise konstruktiv ausgelegt. Neu ist hierbei die Kombination von hartem und dauerelastischem biegeweichem und flexiblem Kunststoff.

Hierbei ist die Weichkomponente so ausgelegt, dass das lichte Innenmaß des betreffenden elektrischen Schaltschrankes im Vergleich zum Aussenmaß der Einbauteile (Normfelder) definiert unterschritten wird, um auf diese Weise den Einbau der Einbauteile nicht unnötig zu erschweren. Die Weichkomponente des Berührungsschutzes, das heißt der Anpresslippe, gleicht hierbei das Differenzmaß der Normfelder aus, so dass dann eine rundum geschlossene Kante zwischen dem Berührungsschutz und der frontseitigen Normfeldabdeckung entsteht.

Diese und weitere vorteilhafte Ausgestaltungen und Verbesserungen der Erfindung sind Gegenstand der Unteransprüche.

Anhand eines in der beigefügten Zeichnung dargestellten Ausführungsbeispieles der Erfindung sollen die Erfindung, vorteilhafte Ausgestaltungen und Verbesserungen der Erfindung sowie besondere Vorteile der Erfindung näher erläutert und beschrieben werden.

Es zeigen:
- Fig. 1: eine ausschnittweise Darstellung des elektrischen Schaltschranks mit Einbauteil und erfindungsgemäßer als Berührungsschutz vorgesehener Abdeckung in Schrägansicht von oben;
- Fig. 2: eine als Berührungsschutz vorgesehene Abdeckung gemäß einer ersten Ausführungsvariante in Schrägansicht von oben;
- Fig. 3: eine als Berührungsschutz vorgesehene Abdeckung gemäß einer zweiten Ausführungsvariante in Schrägansicht von oben und
- Fig. 4: eine ausschnittweise Darstellung des elektrischen Schaltschranks mit montierten Abdeckungen der Einbauteile und erfindungsgemäßer als Berührungsschutz vorgesehenen Abdeckungen in Schrägansicht.

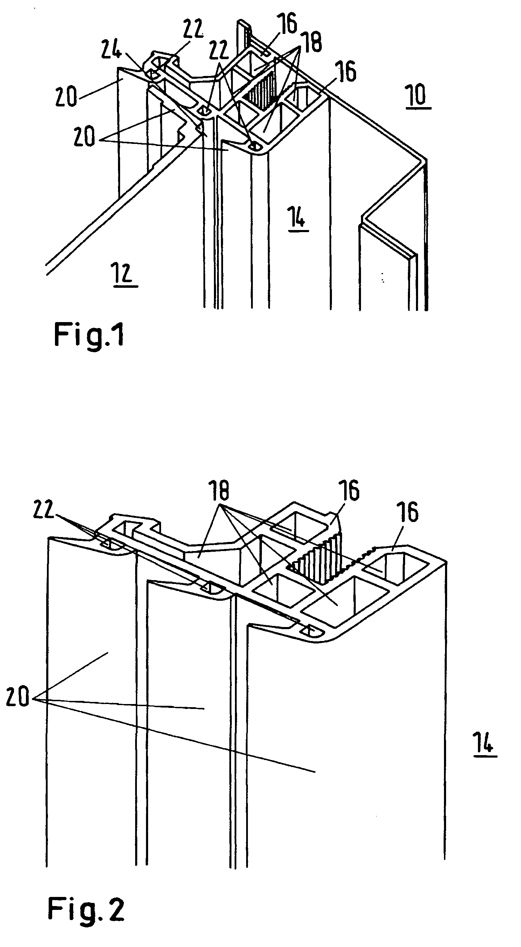

In Fig. 1 ist eine ausschnittweise Darstellung des elektrischen Schaltschranks 10 mit Einbauteil 12 und erfindungsgemäßer als Berührungsschutz vorgesehener Abdeckung 14 in Schrägansicht von oben dargestellt.

In dieser Darstellung ist insbesondere die Gestaltung des als Kunststoffprofil ausgebildeten Berührungsschutzes 14, der auch als Abdeckung 14 vorgesehen ist, gezeigt. Erfindungsgemäß ist diese als Berührungsschutz vorgesehene Abdeckung von einem Längsprofil mit Haltelippen 16, welche von Hohlkammern 18 gebildet beziehungsweise gehalten sind, und mit wenigstens einer Anpresslippe 20 (in Fig. 1 sind drei Anpresslippen 20 vorgesehen), die an einer Hohlkammer 22 anschließt, welche gleichzeitig als Anschluss an die die Abdeckung bildende Haltelippe 16 und als federnd nachgiebige Unterstützung für die dauerelastische Anpresslippe dient, die sich an der Vorderseite der Einbauteile 12 in eine an der Abdeckung der Einbauteile 12 angeformte Anlegekante 24 anlegt, gebildet.

Fig. 2 zeigt eine als Berührungsschutz vorgesehene Abdeckung 14 gemäß einer ersten Ausführungsvariante in Schrägansicht von oben, wobei hier deutlich die beiden vorgesehenen Haltelippen 16 mit zur Abstützung dienenden Hohlkammern 18 zu erkennen sind.

Ferner sind die den beiden Haltelippen gegenüberliegend angeordneten Anpresslippen 20 zu erkennen, die an diesbezügliche Hohlkammern 22 anschließen, welche ihrerseits mit einer die Hohlkammern 18 abschließenden Trennwand 19 verbunden sind.

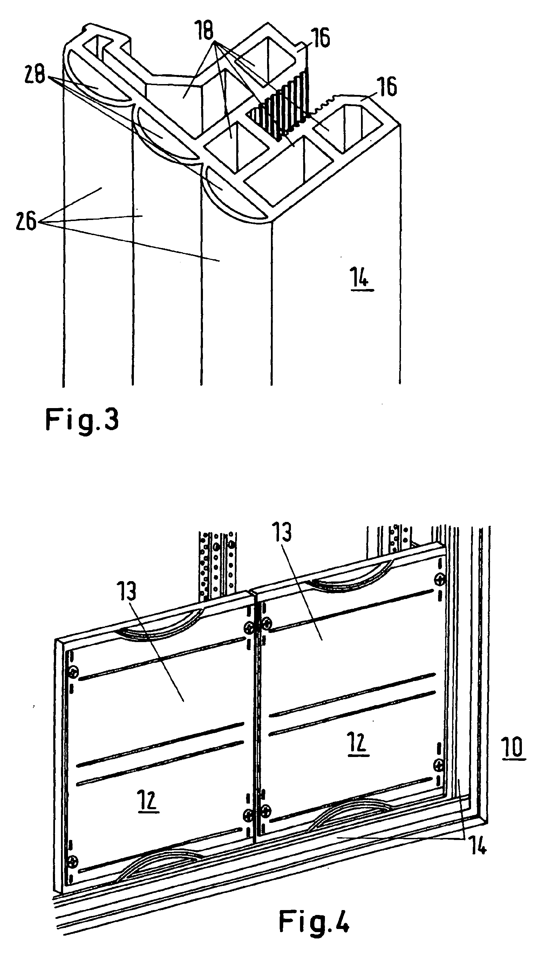

In Fig. 3 ist eine als Berührungsschutz vorgesehene Abdeckung gemäß einer zweiten Ausführungsvariante in Schrägansicht von oben gezeigt, welche an Stelle der gemäß der ersten Ausführungsvariante vorgesehenen Anpresslippen 20 hiervon abweichend Dichtwülste 26 aufeisen. Die Dichtwülste 26 schließen in gleicher Weise die Anpresslippen 20 an Hohlkammern 28 an, die gleichzeitig zur Abstützung dienen und in gewissem Umfang elastisch die Dichtfunktion der Dichtwülste unterstützen.

In Fig. 4 schließlich ist eine ausschnittweise Darstellung des elektrischen Schaltschranks 10 mit montierten Frontseiten 13 der Einbauteile 12 und erfindungsgemäß als Berührungsschutz vorgesehenen Abdeckungen 14 in Schrägansicht wiedergegeben. Die an sich zwischen der Innenwandung des elektrischen Schaltschranks 10 und den Einbauteilen 12 befindlichen Spalte sind vollständig von den erfindungsgemäßen als Berührungsschutz vorgesehenen Abdeckungen 14 überdeckt, so dass kein Zugang durch den Spalt zu irgendwelchen elektrisch leitenden, das heißt unter Spannung stehenden Komponenten des Schaltschranks 10 möglich ist.

Die Erfindung ist nicht auf die in der vorstehenden Beschreibung und den zugehörigen Figuren wiedergegebenen Ausführungsbeispiele beschränkt, sondern sie umfasst im Umfang der Ansprüche auch andere Formgebungen.

Insbesondere umfasst die vorliegende Erfindung dabei auch beliebige Kombinationen bevorzugter Ausführungsformen sowie einzelner Ausgestaltungsmerkmale oder Weiterbildungen, sofern diese sich nicht gegenseitig ausschließen.

**Bezugszeichenliste**

| | | | |
|---|---|---|---|
| 10 | Seitenwand des el. Schaltschranks | 20 | Anpresslippe |
| | | 22 | Hohlkammer |
| 12 | Abdeckung des Einbauteils | 24 | Anlegekante an der Einbauteil-abdeckung |
| 13 | Frontseite des Einbauteils | | |
| 14 | als Berührungsschutz vorgesehene Abdeckung | 26 | Dichtwulst |
| | | 28 | Hohlkammer |
| 16 | Haltelippe | | |
| 18 | Hohlkammer | | |
| 19 | Trennwand | | |

## Patentansprüche

1. Elektrischer Schaltschrank (10) für die Haus- und/oder Industrieinstallation mit darin angeordneten Einbauteilen (12), die üblicherweise als Normfelder bezeichnet sind, deren Abmessungen standardisiert sind, wobei für einen erleichterten Einbau der im Schaltschrank (10) vorgesehene Einbauraum für die Einbauteile um einige Millimeter größer gewählt ist, als deren Abmessungen erfordern, so dass jeweils ein Spalt zwischen dem Schaltschrank (10) und dem jeweiligen Einbauteil (12) entsteht,
**dadurch gekennzeichnet, dass**
für jeden Spalt eine Abdeckung (14) vorgesehen ist, die den betreffenden Spalt ausfüllt und als Berührungsschutz dient wobei die als Berührungsschutz vorgesehene Abdeckung (14) als Kunststoffprofil aus unterschiedlichen Kunststoffen, insbesondere aus zwei verschieden harten Kunststoffen ausgebildet ist und das Kunststoffprofil wenigstens eine Haltelippe (16) aus zähhartem Kunststoff als Spaltabdeckung (14) aufweist sowie wenigstens einen parallel zur Haltelippe (16) angeordneten Wulst (20, 26) aus weichem Kunststoff aufweist, der als Berührungsschutz dient.

2. Elektrischer Schaltschrank nach Anspruch 1, **dadurch gekennzeichnet, dass** die als Berührungsschutz vorgesehene Abdeckung (14) den betreffenden Spalt jeweils komplett ausfüllt.

3. Elektrischer Schaltschrank nach Anspruch 1 oder 2, **dadurch gekennzeichnet, dass** die als Berührungsschutz vorgesehene Abdeckung (14) aus Kunststoff gebildet ist.

4. Elektrischer Schaltschrank nach einem der vorherigen Ansprüche, **dadurch gekennzeichnet, dass** die wenigstens eine Haltelippe (16) zum Eingriff in den betreffenden Spalt zwischen Schaltschrank (10) und Einbauteil (14) vorgesehen ist und sich bündig an die Innenwand des Schaltschrankes (10) anlegt.

5. Elektrischer Schaltschrank nach einem der vorherigen Ansprüche, **dadurch gekennzeichnet, dass** die wenigstens eine Haltelippe (16) als Hohlkammerprofil aus zähhartem Kunststoff mit Hohlkammern (18) ausgebildet ist.

6. Elektrischer Schaltschrank nach einem der vorherigen Ansprüche, **dadurch gekennzeichnet, dass** der wenigstens eine Wulst (20, 26) als Anpresslippe (20) aus biegeelastischem Kunststoff federnd ausgebildet ist und an das die Haltelippe (16) bildende Profil einstückig anschließt.

7. Elektrischer Schaltschrank nach Anspruch 6, **dadurch gekennzeichnet, dass** die wenigstens eine parallel zur Haltelippe (16) angeordnete Anpresslippe (20) ein mit einer Hohlkammer (22) versehenes Profil bildet.

8. Elektrischer Schaltschrank nach einem der vorherigen Ansprüche, **dadurch gekennzeichnet, dass** die aus der wenigstens einen Haltelippe (16) gebildete Abdeckung (14) in Wechselwirkung mit der wenigstens einen federnd wirksamen als Berührungsschutz dienenden Anpresslippe (20) in dem Spalt gehalten ist.

9. Elektrischer Schaltschrank nach einem der vorherigen Ansprüche, **dadurch gekennzeichnet, dass** wenigstens zwei Anpresslippen (20) oder Dichtwülste (26) vorgesehen sind, die jeden Zugang und manuellen Eingriff in den betreffenden Spalt zwischen Schaltschrank (10) und Einbauteil (14) verhindern.

10. Elektrischer Schaltschrank nach einem der vorherigen Ansprüche, **dadurch gekennzeichnet, dass** die als Berührungsschutz vorgesehene Abdeckung (14) maßlich derart dimensioniert ist, dass die Abdeckung (14) stets unmittelbar an dem der Innenwandung des Schaltschrankes (10) nahen Umfang des betreffenden Einbauteils (14) anschließt.

11. Elektrischer Schaltschrank nach einem der vorherigen Ansprüche, **dadurch gekennzeichnet, dass** das als Berührungsschutz vorgesehene Kunststoffprofil eine rundum geschlossene Abdeckung (14) der Spalte zwischen dem elektrischen Schaltschrank (10) und dem jeweiligen Einbauteil (14) gewährleistet.

12. Elektrischer Schaltschrank nach einem der vorherigen Ansprüche, **dadurch gekennzeichnet, dass** die als Berührungsschutz vorgesehene Abdeckung (14) als Kunststoffhohlprofil (18, 22, 28) mit Halte- und Anpresslippen (16, 20, 26) ausgebildet ist.

## Claims

1. Electrical switchgear cabinet (10) for building and/or industrial installation having installed parts (12) which are arranged therein and are normally referred to as standard panels, whose dimensions are standardized, in which case, in order to simplify installation, the installation area which is provided in the switchgear cabinet (10) for the installed parts is chosen to be a few millimetres larger than their dimensions require, as a result of which a gap in each case results between the switchgear cabinet (10) and the respective installed part (12),
**characterized in that**
a cover (14) is provided for each gap, which cover (14) fills the relevant gap and is used for direct-contact protection, wherein the cover (14), which is provided as direct-contact protection, is in the form of a plastic profile composed of various plastics, in particular of two different hard plastics, and the plastic profile has at least one holding lip (16) composed of hard-tough plastic as a gap cover (14), and also has at least one bead (20, 26), which is arranged parallel to the holding lip (16), is composed of soft plastic and is used as direct-contact protection.

2. Electrical switchgear cabinet according to Claim 1, **characterized in that** the cover (14), which is provided as direct-contact protection, in each case completely fills the relevant gap.

3. Electrical switchgear cabinet according to Claim 1 or 2, **characterized in that** the cover (14), which is provided as direct-contact protection, is formed from plastic.

4. Electrical switchgear cabinet according to one of the preceding claims, **characterized in that** the at least one holding lip (16) is intended to engage in the relevant gap between the switchgear cabinet (10) and the installed part (14), and rests flush on the inner wall of the switchgear cabinet (10).

5. Electrical switchgear cabinet according to one of the preceding claims, **characterized in that** the at least one holding lip (16) is in the form of a hollow-chamber profile composed of hard-tough plastic with hollow chambers (18).

6. Electrical switchgear cabinet according to one of the preceding claims, **characterized in that** the at least one bead (20, 26) is formed in a sprung manner as a contact-pressure lip (20) composed of elastically flexible plastic, and is integrally connected to the profile which forms the holding lip (16).

7. Electrical switchgear cabinet according to Claim 6, **characterized in that** the at least one contact-pressure lip (20) which is arranged parallel to the holding lip (16) forms a profile which is provided with a hollow chamber (22).

8. Electrical switchgear cabinet according to one of the preceding claims, **characterized in that** the cover (14), which is formed from the at least one holding lip (16), is held in the gap such that it interacts with the at least one contact-pressure lip (20), which is used as direct-contact protection and acts in a sprung manner.

9. Electrical switchgear cabinet according to one of the preceding claims, **characterized in that** at least two contact-pressure lips (20) or sealing beads (26) are provided, which prevent access to and manual intervention in the relevant gap between the switchgear cabinet (10) and the installed part (14).

10. Electrical switchgear cabinet according to one of the preceding claims, **characterized in that** the cover (14), which is provided as direct-contact protection, has dimensions such that the cover (14) is always connected directly to that circumference of the relevant installed part (14) which is close to the inner wall of the switchgear cabinet (10).

11. Electrical switchgear cabinet according to one of the preceding claims, **characterized in that** the plastic profile, which is provided as direct-contact protection, ensures a cover (14), which is closed all the way round, for the gaps between the electrical switchgear cabinet (10) and the respective installed part (14).

12. Electrical switchgear cabinet according to one of the preceding claims, **characterized in that** the cover (14), which is provided as direct-contact protection, is in the form of a plastic hollow profile (18, 22, 28) with holding and contact-pressure lips (16, 20, 26).

## Revendications

1. Armoire électrique (10) destinée à une installation domestique et/ou industrielle comportant des éléments (12) disposés dans celle-ci, lesquels éléments sont désignés sous le nom de champs normalisés, dont les dimensions sont normalisées, dans lequel, pour une intégration simplifiée, l'espace d'intégration prévu dans l'armoire électrique (10) pour les éléments est sélectionné de manière à ce que sa taille soit supérieure de quelques millimètres à ce qu'exigent leurs dimensions, de manière à ce qu'un interstice soit respectivement formé entre l'armoire électrique (10) et l'élément respectif (12), **caractérisée en ce que**, pour chaque interstice, il est prévu un capot (14) qui comble l'interstice concerné et est utilisé comme protection contre un contact, dans lequel le capot (14) prévu en tant que protection contre un contact est réalisé sous la forme d'un profilé de matière plastique constitué de matières plastiques différentes, notamment de deux matières plastiques dures différentes et le profilé de matière plastique comporte au moins un rebord de retenue (16) constitué de matière plastique à haute résistance en tant que capot interstitiel (14) ainsi qu'au moins un bourrelet (20, 26) disposé parallèlement au rebord de retenue (16) et constitué d'une matière plastique souple servant de protection contre un contact.

2. Armoire électrique selon la revendication 1, **caractérisée en ce que** le capot (14) prévu en tant que protection contre un contact comble entièrement l'interstice concerné respectif.

3. Armoire électrique selon la revendication 1 ou 2, **caractérisée en ce que** le capot (14) prévu en tant que protection contre un contact est formé de matière plastique.

4. Armoire électrique selon l'une quelconque des revendications précédentes, **caractérisée en ce que** l'au moins un rebord de retenue (16) est prévu pour venir en prise dans l'interstice concerné entre l'armoire électrique (10) et l'élément (14) et est mis en place de manière solidaire de la paroi intérieure de l'armoire électrique (10).

5. Armoire électrique selon l'une quelconque des revendications précédentes, **caractérisée en ce que** l'au moins un rebord de retenue (16) est réalisé sous la forme d'un profilé à chambre creuse constitué d'une matière plastique résistante comportant des chambres creuses (18).

6. Armoire électrique selon l'une quelconque des revendications précédentes, **caractérisée en ce que** l'au moins un bourrelet (20, 26) est réalisé sous la forme d'un rebord de compression (20) réalisé de manière à présenter une action de ressort en matière plastique élastique en flexion et est relié de manière solidaire au profilé formant le rebord de retenue (16).

7. Armoire électrique selon la revendication 6, **caractérisée en ce que** l'au moins un rebord de compression (20) disposé parallèlement au rebord de retenue (16) forme un profilé comportant une chambre creuse (22).

8. Armoire électrique selon l'une quelconque des revendications précédentes, **caractérisée en ce que** le capot (14) qui est formé de l'au moins un rebord de retenue (16) est maintenu dans l'interstice en coopération avec l'au moins un rebord de compression (20) servant de protection contre un contact et à action de ressort.

9. Armoire électrique selon l'une quelconque des revendications précédentes, **caractérisée en ce qu'**il est prévu au moins deux rebords de compression (20) ou bourrelets d'étanchéité (26) qui limitent chaque accès et introduction de la main dans l'interstice concerné entre l'armoire électrique (10) et l'élément (14).

10. Armoire électrique selon l'une quelconque des revendications précédentes, **caractérisée en ce que** le capot (14) prévu en tant que protection contre un contact est dimensionné de manière à ce que le capot (14) soit directement relié au périmètre de l'élément concerné (14) à proximité de la paroi intérieure de l'armoire électrique (10).

11. Armoire électrique selon l'une quelconque des revendications précédentes, **caractérisée en ce que** le profilé de matière plastique prévu en tant que protection contre un contact garantit un recouvrement entièrement fermé (14) de l'interstice entre l'armoire électrique (10) et l'élément (14) respectif.

12. Armoire électrique selon l'une quelconque des revendications précédentes, **caractérisée en ce que** le capot (14) prévu en tant que protection contre un contact est réalisé sous la forme d'un profilé de matière plastique (18, 22, 28) présentant des rebords de retenue et de compression (16, 20, 26).
